(19) Europäisches Patentamt
European Patent Office
Office européen des brevets

(11) **EP 3 137 321 B1**

(12) **EUROPÄISCHE PATENTSCHRIFT**

(45) Veröffentlichungstag und Bekanntmachung des Hinweises auf die Patenterteilung:
**13.06.2018   Patentblatt 2018/24**

(21) Anmeldenummer: **15722109.4**

(22) Anmeldetag: **28.04.2015**

(51) Int Cl.:
*B60G 13/00* (2006.01)          *B60G 15/06* (2006.01)
*B60G 17/04* (2006.01)          *B60G 17/08* (2006.01)
*F16F 9/06* (2006.01)           *F16F 9/54* (2006.01)
*F16F 13/10* (2006.01)          *F16F 13/08* (2006.01)

(86) Internationale Anmeldenummer:
**PCT/EP2015/059227**

(87) Internationale Veröffentlichungsnummer:
**WO 2015/165912 (05.11.2015 Gazette 2015/44)**

(54) **ANORDNUNG EINES EINEM RAD EINES FAHRZEUGS ZUGEORDNETEN SCHWINGUNGSDÄMPFERS**

ASSEMBLY OF A VIBRATION DAMPER ASSOCIATED WITH A WHEEL OF A VEHICLE

AGENCEMENT D'UN AMORTISSEUR DE VIBRATIONS ASSOCIÉ À UNE ROUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2014   DE 102014208083**

(43) Veröffentlichungstag der Anmeldung:
**08.03.2017   Patentblatt 2017/10**

(73) Patentinhaber: **Bayerische Motoren Werke Aktiengesellschaft**
**80809 München (DE)**

(72) Erfinder: **SCHMIDT, Roland**
**82131 Stockdorf (DE)**

(56) Entgegenhaltungen:
DE-A1- 19 629 959          DE-A1-102008 008 007
DE-A1-102010 007 237          DE-C1- 19 951 693
FR-A5- 2 136 785          JP-A- S5 298 874
JP-A- H05 215 178          JP-A- S58 136 506
JP-U- S58 119 409          US-A- 4 345 661

**Beschreibung**

Die Erfindung betrifft eine Anordnung eines einem Rad eines Fahrzeugs zugeordneten (hydraulischen) Schwingungsdämpfers, der einen fluidgefüllten Zylinder aufweist, in dem ein Dämpferkolben mit einer Kolbenstange geführt und beidseitig des Dämpferkolbens eine Dämpfer-Kammer gebildet ist, wobei an die der Kolbenstange gegenüberliegende Dämpferkammer ein insbesondere in Form eines Gasdruckpolsters ausgebildeter Druckspeicher oder anderer Zwischenspeicher für eine Teilmenge der im Dämpfer-Zylinder befindlichen Hydraulikflüssigkeit angeschlossen ist, und wobei der Schwingungsdämpfer über ein Dämpferlager mit einem in Verlagerungsrichtung des Dämpferkolbens verformbaren gummielastischen Körper am Fahrzeug-Aufbau gelagert ist, in welchem Dämpferlager weiterhin eine hydraulische Druckkammer ausgebildet ist, die mit derjenigen Dämpfer-Kammer über eine fluidleitende Verbindung verbunden ist, deren Volumen sich beim Einfedern des Rades gegenüber dem Fahrzeug-Aufbau verringert, nach dem Oberbegriff des Anspruchs 1, und geht von der DE 196 29 959 A1 als nächstkommendem Stand der Technik aus; weiterhin seien als Stand der Technik die US 8,376,100 B2 sowie die JP S58 136506 A genannt. Die JP S58 136506 A offenbart die Merkmale des Oberbegriffs des Anspruchs 1. Die an einem Fahrzeug zwischen dessen Rädern und dem über sog. Tragfedern auf diesen Rädern in Vertikalrichtung abgestützten Fahrzeug-Aufbau vorgesehenen Schwingungsdämpfer dienen bekanntlich beim Einfedern und Ausfedern des jeweiligen Rades (d.h. wenn sich dieses im wesentlichen in Vertikalrichtung gegenüber dem Aufbau bewegt) zum Dämpfen dieser (zum Aufbau hin gerichteten) Einfeder-Bewegung bzw. (vom Aufbau weg gerichteten) Ausfeder-Bewegung. Üblicherweise umfassen solche hydraulischen Schwingungsdämpfer einen (Dämpfer)-Zylinder, in welchen ein (Dämpfer)-Kolben in Richtung der besagten Ein- und Ausfeder-Bewegung verlagerbar geführt ist. Durch (Vertikal)-Bewegungen des jeweiligen Rades gegenüber dem Fahrzeug-Aufbau bewegt sich der Kolben im Zylinder und verdrängt dabei Hydraulikflüssigkeit, insbesondere ein Öl. Üblicherweise ist die Kolbenstange des Schwingungsdämpfers über ein gummielastisches Dämpferlager mit dem Fahrzeug-Aufbau verbunden, während der Zylinder des Schwingungsdämpfers starr an einem das Rad drehbar tragenden Radträger befestigt ist. In dem besagten Dämpferlager ist dabei das freie Ende der Kolbenstange mit einem im weitesten Sinne hohlzylinderartig ausgebildeten gummielastischen Körper, in dessen Zentrum die Kolbenstange liegt oder gehalten ist, üblicherweise über eine Befestigungsscheibe fest verbunden, während die Außenseite dieses gummielastischen Körpers am Fzg.-Aufbau abgestützt ist.

Die eingangs genannte DE 196 29 959 A1 zeigt eine Schwingungsdämpfer-Anordnung mit einem Hydrolager, wobei der genannte gummielastische Körper gegen eine hydraulische Druckkammer abgestützt ist, die mit derjenigen Kammer im Zylinder des Dämpfers, deren Volumen sich beim Einfedern des Rades gegenüber dem Fahrzeug-Aufbau verringert, hydraulisch verbunden ist. Damit sollen nicht nur die niederfrequenten Schwingungen der Fahrzeug-Räder gegenüber dem Aufbau im Rahmen von deren sichtbaren Ein- und Ausfeder-Bewegungen (- diese werden im Fachjargon auch als Aufbaufrequenzen bezeichnet -) bedämpfbar sein, sondern es sollen aufgrund des Hydrolagers mit einem solchen Schwingungsdämpfer auch höherfrequente von der Fahrbahn über die Räder in Richtung des Fzg.-Aufbaus eingeleitete Schwingungen, welche im Fachjargon als Radfrequenzen bezeichnet werden, bedämpft werden können, indem beim Einfedern des Rades Hydraulikflüssigkeit aus dem Dämpfer-Zylinder in die Druckkammer des Hydrolagers gefördert wird.

Als weiterer bekannter Stand der Technik sei bspw. die US 8,376,100 B2 genannt, die einen sog. Gerotor an einem hydraulischen Schwingungsdämpfer zeigt, wobei die beiden im Dämpfer-Zylinder vorgesehenen Dämpfer-Kammern über eine (vorzugsweise elektromotorisch) angetriebene Hydraulikpumpe miteinander verbunden oder verbindbar sind. Derartige Schwingungsdämpfer werden auch als aktive Schwingungsdämpfer bezeichnet, da mit diesen über die angetriebene Hydraulikpumpe eine Kraft zwischen dem zugeordneten Rad und dem Fahrzeug-Aufbau eingeleitet werden kann, mit welcher der Fzg.-Aufbau gegenüber dem Rad bspw. angehoben werden kann (d.h. dass in diesem Fall das Rad durch geeigneten Betrieb der Hydraulikpumpe quasi zum "Ausfedern" gebracht werden kann). Mit solchen aktiven Schwingungsdämpfern ist bspw. an einem zweispurigen zweiachsigen Fahrzeug eine Wankstabilisierung des Fzg.-Aufbaus bei schneller Kurvenfahrt des Fahrzeugs darstellbar. Während nämlich an einem solchen Fahrzeug mit einfachen nicht aktiven (sog. "passiven") Schwingungsdämpfern das bei stationärer Kreisfahrt auftretende Wankmoment nur über die Tragfedern und einen üblicherweise vorgesehenen Querstabilisator abgestützt wird und dabei im Dämpferlager annähernd keine Kräfte auftreten, kann mittels eines aktiven Schwingungsdämpfers das Wanken des Fzg.-Aufbaus verhindert oder begrenzt werden, indem über die Kolbenstange des Schwingungsdämpfers eine Kraft auf das Dämpferlager und damit auf den Fzg.-Aufbau ein- bzw. aufgebracht wird. Der aktive Schwingungsdämpfer wirkt dann als hydraulischer Steller. Vorteilhafterweise kann mit einem solchen aktiven Schwingungsdämpfer aus dessen Dämpfungsfunktion auch Energie, im Falle einer elektromotorisch angetriebenen Hydraulikpumpe elektrische Energie, gewonnen werden. Anders als bei herkömmlichen (passiven) Schwingungsdämpfern erfolgt eine Dämpfung der Bewegung des Dämpferkolbens (und somit einer Relativbewegung zwischen dem Fahrzeug-Aufbau und dem Fahrzeug-Rad) nämlich nicht durch die beiden Dämpfer-Kammern verbindende Drosselkanäle im Dämpferkolben, sondern über die genannte Hydraulikpumpe, welche von der zwischen den Dämpfer-Kammern überströmenden Hydraulikflüssigkeit angetrieben wird und welche hierdurch ihren zugeordneten Motor bzw. Elektromotor antreibt, der dann als elektrischer Generator wirkt.

Zurückkommend auf die Möglichkeit, dass mit einem aktiven Schwingungsdämpfer relativ hohe Kräfte "gestellt", d.h. zwischen dem Rad und dem Fahrzeug-Aufbau eingeleitet werden können, wurde vorliegend erkannt, dass bei Verwendung einer herkömmlichen Dämpferlagerung am Fahrzeug-Aufbau über einen einfachen gummielastischen Körper dieser jedenfalls während des Einleitens solcher hoher Kräfte stark verformt und damit in sich verspannt werden würde und sich als Folge dessen verhärten würde. Eine solche Verhärtung jedoch würde die eigentlich durch diesen elastischen Körper zu leistende schwingungstechnische Entkopplung (bezüglich höherer Frequenzen) zwischen dem Schwingungsdämpfer (bzw. dem Rad) und dem Fahrzeug-Aufbau behindern.

Vorstehende Problematik dürfte auch beim weiteren Stand der Technik nach der JP S58 136506 A auftreten. Hier ist eine Höhenverstelleinrichtung für den Fahrzeugaufbau an einem Schwingungsdämpfer gezeigt, bei dem oberhalb des durch einen gummielastischen Körper gebildeten Dämpferlagers eine erste (dort mit der Bezugsziffer 13 gekennzeichnete) Hydraulikkammer vorgesehen ist und unterhalb des Dämpferlagers eine zweite (mit der Bezugsziffer 21 gekennzeichnete) Hydraulikkammer vorgesehen ist. In jede dieser Hydraulikkammern ist stufenweise von einer außerhalb des Dämpfers vorgesehenen Ölquelle durch eine Zutrittsöffnung Hydrauliköl zuführbar, womit diese Kammer vergrößert und damit der Fahrzeug-Aufbau angehoben wird. In dieser Schrift steht geschrieben, dass die zweite Hydraulikkammer (13) mittels eines in der Kolbenstange des Dämpferkolbens vorgesehenen Kanals mit einem unteren Bereich des Dämpfers in Verbindung steht - bei diesem unteren Bereich handelt es sich jedoch nicht um die untere Kammer im Dämpferzylinder, vielmehr soll bei kompakter Bauweise eine gewisse Größe der zweiten Hydraulikkammer erzielt werden - von irgendwelchen Maßnahmen zur Bedämpfung höherfrequenter Schwingungen mittels des durch einen gummielastischen Körper gebildeten Dämpferlagers ist in der genannten Schrift keine Rede.

Nun wieder auf die weiter oben geschilderte Problematik der Verhärtung des gummielastischen Körpers durch Einleiten hoher Kräfte eingehend mit der vorliegenden Erfindung weiterhin erkannt, dass eine hydraulische Druckkammer im Dämpferlager, in welchem der Schwingungsdämpfer unter Zwischenschaltung eines insbesondere in Verlagerungsrichtung des Dämpferkolbens verformbaren gummielastischen Körpers am Fahrzeug-Aufbau abgestützt ist, zur Linderung der vorstehend genannten Problematik beitragen kann, wenn diese hydraulische Druckkammer mit derjenigen Dämpfer-Kammer, deren Volumen sich beim Einfedern des Rades gegenüber dem Fahrzeug-Aufbau verringert, fluidleitend verbunden ist.

Vorliegend wurde weiterhin erkannt, dass diesbezüglich jedoch noch weitere Verbesserungen möglich sind, weshalb es nun Aufgabe der vorliegenden Erfindung ist, eine Schwingungsdämpfer-Anordnung nach dem Oberbegriff des Anspruchs 1 als aktiven Schwingungsdämpfer derart weiterzubilden, dass die Gefahr einer Verhärtung des gummielastischen Körpers im Dämpferlager minimiert wird.

Die Lösung der Aufgabe ergibt sich durch die kennzeichnenden Merkmale des Anspruchs 1, d.h. dadurch, dass die zu beiden Seiten des Dämpferkolbens im Dämpfer-Zylinder gebildeten Dämpfer-Kammern über eine motorisch antreibbare Hydraulikpumpe hydraulisch miteinander verbunden sind, und dass im Dämpferlager ein direkt oder indirekt in Verlagerungsrichtung des Dämpferkolbens auf den gummielastischen Körper einwirkendes Federelement vorgesehen ist, dessen Federkraft derart gerichtet und bemessen ist, dass sich bei stillstehendem Dämpferkolben und Druckgleichheit in den beiden Dämpfer-Kammern die auf den gummielastischen Körper in Verlagerungsrichtung des Dämpferkolbens wirkenden Kräfte aufheben, so dass dieser stationär betrachtet frei von in Verlagerungsrichtung des Dämpferkolbens wirkenden Kräften ist. Die Unteransprüche haben vorteilhafte Ausgestaltungen der Erfindung zum Gegenstand.

Zunächst wird also vorgeschlagen, einen grundsätzlich bereits bekannten (passiven) Schwingungsdämpfer, der über ein Hydrolager mit einem gummielastischen Körper am Fahrzeug-Aufbau gelagert ist und bei dem das Hydrolager mit der sich beim Einfedern des Rades verkleinernden Dämpfer-Kammer verbunden ist, (bspw. gemäß der eingangs genannten DE 196 29 959 A1) als grundsätzlich ebenfalls bekannten aktiven Schwingungsdämpfer (mit einer Hydraulikpumpe zwischen den beiden Dämpferkammern) auszubilden. Weiterhin werden Maßnahmen vorgeschlagen, mit Hilfe derer der gummielastische Körper möglichst spannungsfrei gehalten wird. Mit diesen weiteren erfindungsgemäßen Merkmalen, nämlich dem wie angegeben wirkenden Federelement und dem damit erzielten Kräftegleichgewicht ist gewährleistet, dass der besagte gummielastische Körper nicht nur dann, wenn der Schwingungsdämpfer in seiner üblichen Dämpfungsfunktion (wie ein nicht-aktiver, passiver Schwingungsdämpfer) wirkt, erfolgreich höherfrequente Schwingungen bedämpfen kann, sondern diese seine eigentliche Aufgabe auch dann erfolgreich erfüllen kann, wenn der aktive Schwingungsdämpfer als hydraulischer Steller betrieben wird. Auch in einem solchen Betriebsfall bleibt nämlich der gummielastische Körper eines erfindungsgemäßen aktiven Schwingungsdämpfers von zusätzlichen hohen Kräften verschont, so dass keine Gefahr besteht, dass dieser gummielastische Körper des Schwingungsdämpfers während dessen Wirkens als hydraulischer Steller verhärtet (und sodann höherfrequente Schwingungen nicht mehr erfolgreich bedämpfen könnte).

Was den Begriff "höherfrequent" bzw. die Dämpfung "höherfrequenter Schwingungen" betrifft, so ist der gummielastische Körper des Dämpferlagers, über den bspw. bzw. vorzugsweise die Kolbenstange des Schwingungsdämpfers am Fzg.-Aufbau abgestützt bzw. gelagert ist, dahingehend ausgelegt, dass damit höherfrequente oder hochfrequente Anregungen, vorzugsweise oberhalb von 10 Hz bis 15 Hz (der Bereich dieser hochfrequenten Anregungen kann dabei bis zu mehreren tausend Hertz reichen) bedämpft werden können. Hingegen wird wie üblich die Schwingungs-Dämpfung zwischen dem jeweiligen Fzg.-Rad und dem Fzg.-Aufbau im (unterhalb dieses zahlenmäßig angegebenen Frequenzbereichs liegenden) niederfrequenten Bereich vom eigentlichen Schwingungsdämpfer, nämlich von der Einheit aus Dämpfer-Zylinder und Dämpfer-Kolben übernommen. Bei einem erfindungsgemäßen Schwingungsdämpfer sind somit zwei Dämpfersysteme in Reihe geschaltet. Zum einen ist im niederfrequenten Bereich (kleiner 10 Hz - 15 Hz) die übliche Dämpfung über den im Dämpfer-Zylinder geführten Kolben vorgesehen, während für den höherfrequenten Bereich die Dämpfung über den besagten elastischen Körper im Dämpferlager erfolgt und dabei vorzugsweise keine (sichtbare) Relativbewegung zwischen dem Dämpfer-Kolben und dem Dämpfer-Zylinder stattfindet. Und insbesondere für diesen höherfrequenten Bereich ist der besagte elastische Körper durch den in der hydraulischen Druckkammer des Dämpferlagers herrschenden bzw. in diese über die fluidleitende Verbindung übertragenen Druck sowie die Kraft des besagten Federelements von zusätzlichen Kräften entlastet und damit quasi stabilisiert, wodurch ein ohne eine solche Entlastung möglicherweise aufgrund zu hoher Belastung auftretende Verformung und daraus resultierende und im Hinblick auf eine erfolgreiche Dämpfung höherfrequenter Schwingungen unerwünschte Verhärtung dieses elastischen Körpers verhindert wird.

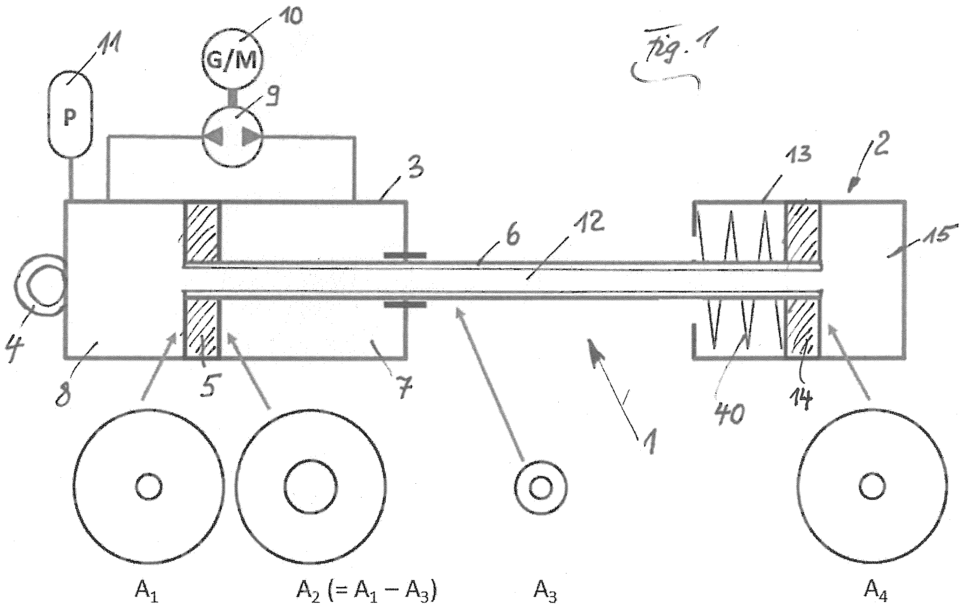

Eine physikalische Herleitung, wie ein erfindungsgemäßes Federelement auszulegen ist, erfolgt an späterer Stelle anhand der beigefügten Figur 1. Zunächst sei jedoch noch erwähnt, dass dadurch, dass die sich beim Einfedern des Rades (gegenüber dem Fzg.-Aufbau) verkleinernde Dämpfer-Kammer mit der im Dämpferlager vorgesehenen hydraulischen Druckkammer verbunden ist, sichergestellt ist, dass beim Einfedern des Rades oder beim Anheben des Fahrzeug-Aufbaus gegenüber dem Rad im Falle des Betriebs des aktiven Schwingungsdämpfers als hydraulischer Steller und somit grundsätzlich bei Kompressionen der besagten Dämpfer-Kammer mit Sicherheit Hydraulikflüssigkeit aus dem Dämpfer-Zylinder in die besagte Druckkammer gefördert wird. Dadurch wird insbesondere bei diesen hohen Belastungsfällen der gummielastische Körper bestmöglich von zusätzlichen Kräften frei gehalten.

Im übrigen kann durch geeignete Gestaltung des Querschnitts der genannten fluidleitenden Verbindung zwischen der besagten Dämpfer-Kammer und der hydraulischen Druckkammer im Dämpferlager dessen Dämpfungseigenschaft quasi frequenzselektiv gestaltet werden. Ist nämlich die fluidleitende Verbindung eng oder stark gedrosselt, so stellt sich bei niedrigen Frequenzen noch ein vollständiger Druckausgleich zwischen der besagten (über die fluidleitende Verbindung mit der Druckkammer des Dämpferlagers verbundenen) Dämpfer-Kammer im Dämpfer-Zylinder und der Druckkammer im Dämpferlager ein. Bei hohen Frequenzen hingegen kann die Hydrauliksäule in der fluidleitenden Verbindung aufgrund ihrer Trägheit Druckänderungen nicht mehr oder zumindest nicht mehr vollständig folgen und es stellt sich folglich ein Differenzdruck zwischen der Druckkammer des Dämpferlagers der besagten Dämpfer-Kammer ein. Dies kann zur gezielten Auslegung der Dämpfungseigenschaften im Dämpferlager auf bestimmte, insbesondere höhere Frequenzen (gemäß der Erläuterung weiter oben) genutzt werden. Dadurch, dass im höherfrequenten Bereich möglicherweise kein vollständiger Druckausgleich erfolgt, kann gezielt eine gewisse Verformung des gummielastischen Körpers erzwungen werden und damit die Dämpfungseigenschaften des Gummi-Materials dieses gummielastischen Körpers genutzt werden.

Nochmals auf die Eigenschaft eines erfindungsgemäßen Schwingungsdämpfers als aktiver Schwingungsdämpfer zurückkommend kann - wie bereits erläutert - mit der durch eine elektrische Maschine antreibbaren Hydraulikpumpe gezielt Hydraulikflüssigkeit von einer Kammer des Schwingungsdämpfers in die andere Dämpfer-Kammer des Dämpfer-Zylinders gefördert und als Folge dessen der Fzg.-Aufbau gegenüber dem jeweiligen Rad gezielt angehoben oder abgesenkt werden. Weiterhin kann die mit der Hydraulikpumpe antriebsmäßig verbundene elektrische Maschine auch als Generator verwendet werden, so dass bei einer durch die Fahrt des Fahrzeugs auf einer Fahrbahn verursachten Aus- oder Einfederbewegung des Rades elektrische Energie gewonnen werden kann, wobei gleichzeitig die gewünschte Dämpfung der Ein- oder Ausfederbewegung des Fzg.-Rades gegenüber dem Fzg.-Aufbau erfolgt. Dabei ist jedoch zu beachten, dass aufgrund der Trägheit der Hydraulikpumpe und der elektrischen Maschine eine wirkungsvolle Dämpfungs-Regelung auf relativ niedrige Frequenzen begrenzt ist, d.h. dass damit praktisch nur im Frequenzbereich der sichtbaren Vertikal-Schwingungen des Rades gegenüber dem Fzg.-Aufbau (im Fachjargon als "Aufbaufrequenzen" bezeichnet) eine wirkungsvolle Dämpfung dieser Schwingungsbewegung erzielbar ist. Im Bereich der Schwingungs-Eigenfrequenz des Fzg.-Aufbaus und somit im Bereich der weiter oben genannten höherfrequenten Schwingungen, die im Fachjargon auch als "Radfrequenzen" bezeichnet werden, ist damit jedoch keine wirkungsvolle Dämpfung erzielbar und auch die durch einen einfachen gummielastischen Körper im Dämpferlager erzielbare Dämpfung ist - wie bereits erläutert wurde - wegen Verhärtung desselben nicht ausreichend, so dass ein einfacher(er) - als ein erfindungsgemäßer - aktiver Schwingungsdämpfer mit einfachem üblichen Dämpferlager (ohne die hier vorgeschlagene Druckkammer) deutliche - insbesondere akustische - Schwächen zeigt, die dem Fahrer eines damit ausgerüsteten Fahrzeugs ein unkomfortables Fahrgefühl vermitteln. Diese Schwächen lassen sich mit einem erfindungsgemäßen Schwingungsdämpfer mit einer hydraulischen Druckkammer im Dämpferlager und zusätzlichem erfindungsgemäßen Federelement vermeiden.

Es kann im Dämpferlager zusätzlich zum elastischen Körper eine Hydraulikdämpfung integriert sein. Eine solche dem Fachmann grundsätzlich bekannte Hydraulikdämpfung umfasst einen fluidgefüllten ersten Arbeitsraum im elastischen Körper sowie einen zweiten Arbeitsraum innerhalb des Dämpferlagers außerhalb des elastischen Körpers und zumindest eine Drossel zwischen diesen beiden Arbeitsräumen. Die beiden Arbeitsräume sind vorteilhafterweise als ringförmige Räume konzentrisch um die Kolbenstange angeordnet. Dementsprechend wird als Drossel vorteilhafterweise eine ringförmige Scheibe mit geeigneten Löchern (die ggf. zusätzlich mit Ventilplatten versehen sein können) vorgeschlagen. Vorgesehen sein kann dabei auch ein gasgefüllter Ausgleichsraum. Zwischen dem Ausgleichsraum und dem zweiten Arbeitsraum befindet sich eine Membran. Wenn sich dann aufgrund höherfrequenter Ein- und Ausfederwegungen des Rades die Kolbenstange (schwingend) bewegt, so wird auch der elastische Körper entsprechend in im Vergleich zu sichtbaren Hubbewegungen des Fahrzeug-Rades (gegenüber dem Fzg.-Aufbau) höherfrequente Schwingungs-Bewegungen gesetzt. Dadurch wird Hydraulikflüssigkeit zwischen den beiden Arbeitsräumen durch die Drossel hindurch bewegt, wodurch sich eine (zur Wirkung des gummielastischen Körpers) zusätzliche Dämpfung einstellt.

Es bestehen verschiedene Möglichkeiten, für die Anordnung des erfindungsgemäßen Federelementes. Nach einer ersten Ausführungsform kann dieses Federelement direkt am bzw. gegenüber dem Fahrzeug-Aufbau abgestützt sein. Alternativ kann die hydraulische Druckkammer im Dämpferlager ihrerseits nach Art eines Hydraulikzylinders ausgebildet sein und in diesem Sinne von einem in Verlagerungsrichtung des Dämpferkolbens verlagerbaren Druckausgleichskolben begrenzt sein, der über das besagte Federelement (d.h. unter Zwischenschaltung dieses Federelementes) am gummielastischen Körper abgestützt ist. Dabei kann der verlagerbare Druckausgleichskolben bei stillstehendem Dämpferkolben und Druckgleichheit in den beiden Dämpfer-Kammern durch das Federelement gegen einen Anschlag gedrückt sein, was jedoch nicht zwingend erforderlich ist.

Weitere Einzelheiten, Merkmale und Vorteile der Erfindung ergeben sich aus der nachfolgenden Beschreibung der beigefügten Figuren, in denen stets gleiche Elemente mit den gleichen Bezugsziffern gekennzeichnet sind. Es zeigt:

Figur 1    eine Prinzipdarstellung einer erfindungsgemäßen Schwingungs-dämpfer-Anordnung mit separater Darstellung der relevanten Flächen (zur Erläuterung des physikalischen Zusammenhangs), abweichend von der realen Eibausituation in horizontaler Lage,

Figur 2    in isometrischer Darstellung einen Schnitt durch ein erstes Ausführungsbeispiel eines erfindungsgemäßen Dämpferlagers,

Figur 3    in einer Darstellung ähnlich Figur 2 einen Schnitt durch ein zweites Ausführungsbeispiel eines erfindungsgemäßen Dämpferlagers.

Figur 1 zeigt schematisch stark vereinfacht einen Schwingungsdämpfer 1 mit einem Dämpferlager 2. Das Dämpferlager 2 ist mit seinem Gehäuse 13 an einer figürlich nicht dargestellten Karosserie eines Fahrzeuges, d.h. am Fahrzeug-Aufbau befestigt. Das Dämpferlager 2 ist weiterhin verbunden mit einer Kolbenstange 6 des Schwingungsdämpfers 1 bzw. es ist diese Kolbenstange 6 auf später noch näher erläuterte Weise im Dämpferlager 2 gelagert. Die Kolbenstange 6 ist mit einem Dämpfer-Kolben 5 fest verbunden. Der Dämpfer-Kolben 5 ist in einem mit Hydraulikflüssigkeit befüllten Dämpfer-Zylinder 3 - abweichend von der figürlichen Darstellung im wesentlichen in Vertikalrichtung - linear beweglich geführt. Der Dämpfer-Zylinder 3 wird gemeinhin auch als Dämpferrohr des Schwingungsdämpfers 1 bezeichnet. Der Dämpfer-Zylinder 3 ist üblicherweise und auch hier mit einer Anbindung 4 radseitig angeordnet und ist hierfür (- abweichend von der figürlichen Darstellung mit seiner Zylinderachse im wesentlichen in Vertikalrichtung orientiert -) beispielsweise mit einem Radträger oder einem radführenden Lenker des jeweiligen Fahrzeug-Rads verbunden. Der Dämpfer-Kolben 5 unterteilt den Dämpfer-Zylinder 3 in eine erste Dämpfer-Kammer 7 hier "oberhalb" des Kolbens 5 (d.h. die Dämpfer-Kammer 7 ist dem Fzg.-Aufbau zugewandt) und eine zweite Dämpfer-Kammer 8 hier "unterhalb" des Kolbens 5 (d.h. die Dämpfer-Kammer 8 ist dem Fzg.-Rad zugewandt). Beim Ein- und Ausfedern des Rades bewegt sich der Kolben 5 gegenüber dem Dämpfer-Zylinder 3, wobei sich in der sog. Druckstufe des Schwingungsdämpfers 1, wenn das Rad zum Fzg.-Aufbau hin einfedert, die zweite Dämpfer-Kammer 8 verkleinert, während sich in der sog. Zugstufe des Schwingungsdämpfers 1, wenn das Fzg.-Rad vom Fzg.-Aufbau weg ausfedert, die erste Dämpfer-Kammer 7 verkleinert.

Figur 1 zeigt des Weiteren eine Hydraulikpumpe 9, die von einer elektrischen Maschine 10 angetrieben werden kann und die hydraulisch mit den beiden Dämpfer-Kammern 7, 8 verbunden bzw. wirkverbunden ist. Es handelt sich hier somit um ein aktives Dämpfersystem bzw. einen aktiven Schwingungsdämpfer 1, da mittels der Hydraulikpumpe 9 der Dämpfer-Kolben 5 gegenüber dem Dämpfer-Zylinder 3 verstellbar bzw. verlagerbar ist. Durch eine solche aktive hydraulische Verstellung des Dämpfer-Kolbens 5 kann beispielsweise Wankbewegungen des Fahrzeug-Aufbaus entgegen gewirkt werden. In diesem Fall wirken der Dämpfer-Kolben 5 und der Dämpfer-Zylinder 3 und somit der Schwingungsdämpfer 1 als Kraft stellender Hydraulikzylinder. Des Weiteren zeigt Figur 1 einen an den Hydraulikkreislauf der beiden Dämpfer-Zylinder 7, 8 und der Hydraulikpumpe 9 angeschlossenen hydraulischen Druckspeicher 11. In diesem Druckspeicher 11 kann insbesondere diejenige Hydraulik-Flüssigkeits-Menge gespeichert werden, welche in der Druckstufe des Schwingungsdämpfers 1 durch die Kolbenstange 6 innerhalb des Dämpfer-Zylinders 3 (bzw. in dessen Dämpfer-Kammer 7) quasi verdrängt wird. Bei Ausbildung des Schwingungsdämpfers als (dem Fachmann bekannter) Einrohrdämpfer befindet sich dieser Druckspeicher 11 (in Form eines sog. Ausgleichsraums) üblicherweise am Boden des Schwingungsdämpfers, bestehend aus einem Gaspolster und einem Trennkolben. Bei Ausbildung des Schwingungsdämpfers als Zweirohrdämpfer kann dieser Druckspeicher 11 bzw. dessen Funktion auch in die dann wie üblich "doppelte" Wand des Dämpferrohrs 3 integriert sein.

Die Einheit aus hydraulischer Pumpe 9 und elektrischer Maschine 10 kann auch generatorisch zur Erzeugung elektrischer Energie verwendet werden, wenn - wie üblich - der Dämpfer-Kolben 5 im Fahrbetrieb des Fahrzeugs beim Ein- oder Ausfedern des Rades durch fahrdynamische Einflüsse bzw. durch Einflüsse der Fahrbahn auf den Fahrzeug-Aufbau gegenüber dem Dämpfer-Zylinder 3 (vertikal) verlagert wird. Dabei erfolgt die Dämpfung dieser in begrenztem Umfang schwingenden Ein- und Ausfederbewegung praktisch nur über den generatorischen Betrieb der dann von der Hydraulikpumpe 9 angetriebenen elektrischen Maschine 10, weshalb - anders als bei üblichen passiven Schwingungsdämpfern - im Dämpfer-Kolben 5 keine gedrosselten Durchtrittsöffnungen für Hydraulikflüssigkeit vorgesehen sind.

Wie Figur 1 zeigt, ist in der Kolbenstange 6 eine fluidleitende Verbindung 12 ausgebildet. Diese fluidleitende Verbindung 12 mündet mit ihrem ersten Ende in die unterhalb des Dämpfer-Kolbens 5 liegende Dämpfer-Kammer 8 und mit ihrem zweiten Ende im Dämpferlager 2, und zwar in einer Druckkammer 15 desselben, wie im weiteren erläutert wird.

Das Dämpferlager 2 weist ein Gehäuse 13 auf, wobei bspw. auf dessen Oberseite Schraubenbolzen angebracht sein können, über welche dieses Gehäuse 13 und damit der Schwingungsdämpfer 1 am Aufbau des Fahrzeugs befestigt wird. Innerhalb des Gehäuses 13 ist die Kolbenstange 6 des Schwingungsdämpfers 1 über einen elastischen Körper 14 (bspw. aus Gummi bestehend) gelagert, welcher vorliegend gummielastischer Körper 14 genannt wird. Dieser gummielastischer Körper 14 ist hier vereinfacht dargestellt als hohlzylindrische Scheibe ausgebildet, in die das freie Ende der Kolbenstange 6 fest eingesetzt ist bzw. mit der die Kolbenstange 6 auf hier nicht näher dargestellte Weise fest verbunden ist. Mit seinem Außenumfang hingegen ist dieser hohlzylindrische gummielastische Körper 14 fest mit der Innenwand des Gehäuses 13 verbunden. Wie allgemein, d.h. insbesondere an passiven Schwingungsdämpfern im Fahrwerk von Kraftfahrzeugen üblich sollen über diesen bzw. mittels dieses gummielastischen Körpers 14 höherfrequente Schwingungen des Fahrzeug-Rades, welche nicht zu einer sichtbaren Verlagerung zwischen Dämpfer-Zylinder 3 und Dämpfer-Kolben 5 führen, jedoch durch die Kolbenstange 6 zum Fahrzeug-Aufbau hin übertragen werden würden, erfolgreich bedämpft werden.

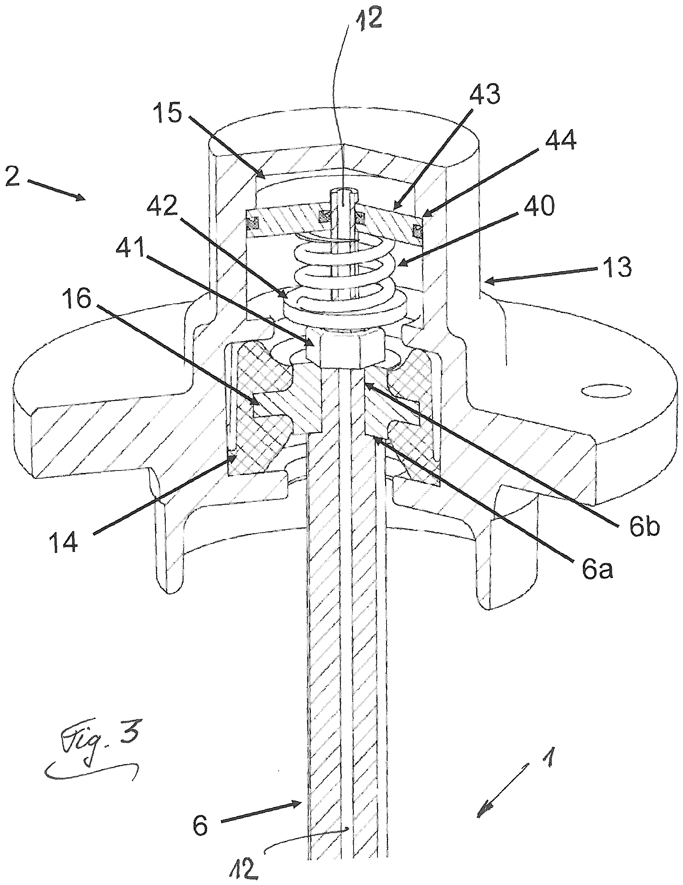

Im Dämpferlager 2 ist ein von einem Abschnitt der Innenwand des Gehäuses 13 sowie vom gummielastischen Körper 14 begrenzter Hohlraum ausgebildet, der als hydraulische Druckkammer fungiert und daher auch als hydraulische Druckkammer 15 bezeichnet ist. In diese hydraulische Druckkammer 15 mündet die in der Kolbenstange 6 verlaufende fluidleitende Verbindung 12. Mit Ausnahme dieser fluidleitenden Verbindung 12 ist die Druckkammer 15 fluiddicht innerhalb des Dämpferlagers 2 ausgebildet. Weiterhin ist hier innerhalb des Gehäuses 13 ein als Druckfeder ausgebildetes Federelement 40 vorgesehen, welches einerseits auf die der Druckkammer 15 gegenüberliegende Seite des gummielastischen Körpers 14 einwirkt und das andererseits, d.h. mit seinem anderen Endabschnitt, am Gehäuse 13 des Dämpferlagers 2 und damit letztlich am Aufbau des Fahrzeugs abgestützt ist. Dabei sei ausdrücklich darauf hingewiesen, dass die soweit beschriebene Anordnung des Federelements 40 keineswegs obligatorisch ist - daneben sind auch andere Anordnungen möglich (bspw. eine Anordnung nach Fig.3), mit denen die gewünschte und im folgenden beschriebene Wirkung dieses Federelements 40 sowie der Druckkammer 15 erzielt werden kann:

Es befinde sich der Schwingungsdämpfer 1 in einem stationären Zustand und es werde zunächst - der Einfachheit halber - auch von der Hydraulikpumpe 9 kein Druck in einer der Kammern 7, 8 des Schwingungsdämpfers 1 erzeugt. Dann herrscht in den beiden Kammern 7, 8 des Schwingungsdämpfers 1 sowie (über die fluidleitende Verbindung 12 durch die Kolbenstange 6) in der Druckkammer 15 des Dämpferlager 2 der gleiche Hydraulikdruck. Dieser wird bestimmt durch den Vordruck des Druckspeichers 11 und liegt bei einem Einrohrdämpfer üblicherweise in der Größenordnung von 30 bar.

Bei (zunächst der Einfachheit halber angenommener) Flächengleichheit der Flächen $A_1$ und $A_4$, nämlich der Fläche $A_1$ des Kolbens 5 in der Dämpfer-Kammer 8 und der senkrecht zur Kolbenstange 6 bzw. zur Verlagerungsrichtung des Dämpfer-Kolbens 5 liegenden Fläche $A_4$ des gummielastischen Körpers 14 in der Druckkammer 15 heben sich folglich die aus dem Druck in der Dämpfer-Kammer 8 sowie in der Druckkammer 15 resultierenden und auf den gummielastischen Körper 14 einwirkenden Kräfte auf. Somit verbleibt noch die aus dem Druck in der anderen Dämpfer-Kammer 7 resultierende und sich aus dieser - gegenüber der Fläche $A_1$ um die Fläche $A_3$ der Kolbenstange 6 reduzierte Fläche $A_2$ des

Dämpfer-Kolbens 3 ergebende und über die Kolbenstange 6 auf den gummielastischen Körper 14 übertragene Kraft, welche es zu kompensieren gilt, damit der gummielastische Körper 14 wunschgemäß im wesentlichen frei von eingeleiteten Kräften bzw. Zusatzkräften ist. Hierfür ist ein bzw. das Federelement 40 vorgesehen, welches der aus dem Hydraulikdruck in der Dämpfer-Kammer 7 resultierenden und auf den gummielastischen Körper 14 einwirkenden Kraft entgegen wirkt. Damit ist der gummielastische Körper 14 zumindest stationär betrachtet frei von in Verlagerungsrichtung des Dämpfer-Kolbens 5 wirkenden Kräften und kann folglich - wie weiter oben ausführlich erläutert wurde - seine Funktion, nämlich die Dämpfung von höherfrequenten Schwingungen, bestmöglich erfüllen. Nur der Vollständigkeit halber sei nochmals erwähnt, dass der im Stationärzustand herrschende Hydraulikdruck in den Dämpfer-Kammern 7, 8 durch die Auslegung des Schwingungsdämpfers 1 fest vorgeben ist und von sich signifikant ändernden Randbedingungen, mit Ausnahme einer geringfügigen Druckänderung in Abhängigkeit vom Einfederzustand (resultierend aus der Veränderung des Gasvolumen des Druckspeichers 11 mit verändertem durch die Kolbenstange 6 verdrängten Volumen) und von Temperatureinflüssen, im wesentlichen unabhängig ist.

Ohne die vorstehend nur hilfsweise eingeführte Gleichheit von Flächen muss nun folgender Zusammenhang bzw. die folgende (algebraische) Gleichung gelten, damit am gummielastischen Körper 14 in Verlagerungsrichtung des Dämpfer-Kolbens 5 betrachtet im Stationärzustand ein Kräftegleichgewicht herrscht:

$$\sum F = 0 = p \bullet A_1 - p \bullet A_2 - p \bullet A_4 + F_{40},$$

wobei $\sum$ das algebraische Summenzeichen ist,
wobei p der im stationären Zustand in den Kammern 7, 8 des Dämpfer-Zylinders 3 herrschende (und für beide Kammern 7, 8 gleiche) Hydraulikdruck ist,
wobei "$\bullet$" für eine algebraische Multiplikation steht, "-"für eine algebraische Differenz steht, und "+"für eine algebraische Summe steht,
wobei die Flächen $A_1$ bis $A_4$ wie oben beschrieben bzw. sich aus der Figurendarstellung offensichtlich ergebend sind, und
wobei $F_{40}$ die geeignet gerichtete Kraft des Federelements 40 und F eine Kraft ist.

Wenn durch die Hydraulikpumpe 9 in einer der Kammern 7 oder 8 des Dämpfer-Zylinders 3 ein zusätzlicher hydraulischer Druck aufgebaut und gleichzeitig in der anderen Dämpfer-Kammer (8 oder 7) hydraulischer Druck abgebaut wird, so hat dies eine Verlagerung des Dämpfer-Zylinders 3 (gegenüber dem Dämpfer-Kolben 5) zur Folge. Im wesentlichen unbeeinflusst davon bleibt jedoch das Kräftegleichgewicht am gummielastischen Körper 14, d.h. auf diesen wirkt auch durch einen Druckaufbau bzw. Druckabbau in den Dämpfer-Kammern 7, 8 keine zusätzliche Kraft ein, solange sich der in der Dämpfer-Kammer 8 herrschende Druck durch die fluidleitende Verbindung 15 in die Druckkammer 15 hinein fortpflanzt. Dabei ist eine geringe zeitliche Verzögerung als Folge des relativ engen Querschnitts der fluidleitenden Verbindung 12 - in Relation zu den wirksamen Flächen in den Dämpfer-Kammern 7, 8 sowie in der Druckkammer 15 - im Hinblick auf das gewünschte Kräftegleichgewicht auch während einer Relativbewegung zwischen Dämpfer-Kolben 5 und Dämpfer-Zylinder 3 von Vorteil.

Bei Vorliegen dieses Kräftegleichgewichts bzw. bei zumindest annähernder Erfüllung dieser obenstehenden Gleichung bleibt der gummielastische Körper 14 auch dann, wenn der Dämpfer-Kolben 5 mittels der von der elektrischen Maschine 10 angetriebenen Hydraulikpumpe 9 verlagert wird und der erfindungsgemäße Schwingungsdämpfer 1 somit als hydraulischer Steller wirkt, nahezu frei von signifikanten Zusatzkräften, welche dessen eigentliche Funktion, nämlich die Dämpfung höherfrequenter Schwingungen, beeinträchtigen würden.

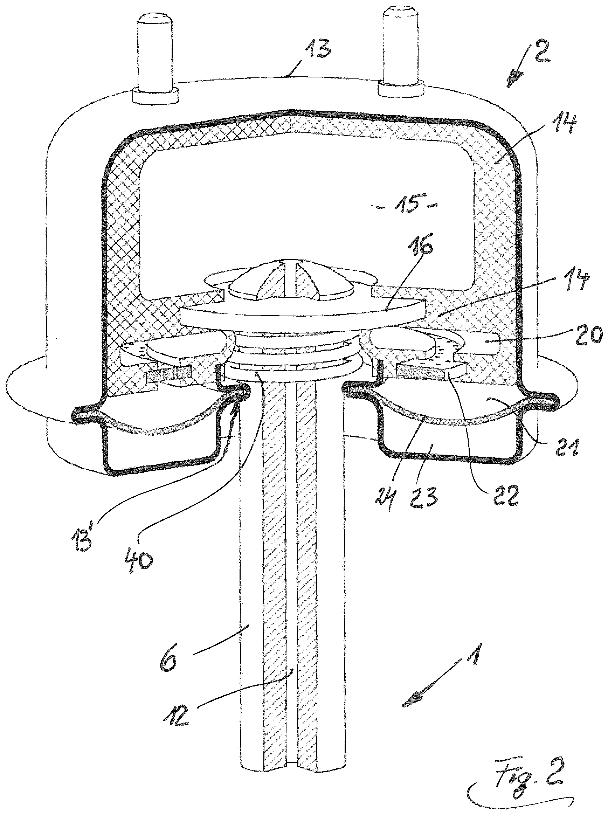

Figur 2 zeigt teilweise mehr ins Detail gehend ein erfindungsgemäßes Dämpferlager 2 mit dem diesem zugewandten Endabschnitt der Kolbenstange 6 - nun in tatsächlicher Einbaulage im Fahrzeug. Dargestellt sind dabei auf der Oberseite des Dämpferlager-Gehäuses 13 nicht näher gekennzeichnete Schraubenbolzen, über welche dieses Gehäuse 13 und damit der Schwingungsdämpfer 1 am Aufbau des Fahrzeugs befestigt ist. Im Gehäuse 13 befindet sich der abstrahiert nach Art eines Hohlzylinders ausgebildete gummielastische Körper 14. Innerhalb dieses gummielastischen Körpers 14 ist die hydraulische Druckkammer 15 vorgesehen, in welcher die in der Kolbenstange 6 verlaufende fluidleitende Verbindung 12 mündet. Zur Befestigung der Kolbenstange 6 zentralliegend im gummielastischen Körper 14 befindet sich auf der Kolbenstange 6 eine Befestigungsscheibe 16, die ihrerseits in den gummielastischen Körper 14 eingebettet ist. Die von der Kolbenstange 6 übertragene Kraft und geringfügige höherfrequent schwingende Bewegungen der Kolbenstange 6 (insbesondere in Vertikalrichtung, d.h. in Längsrichtung der Kolbenstange 6) werden über diese Befestigungsscheibe 16 in den gummielastischen Körper 14 übertragen. Vom gummielastischen Körper 14 wiederrum erfolgt die Übertragung der von der Kolbenstange 6 Kraft eingeleiteten Kraft und zunächst eigentlich auch der höherfrequent schwingenden Bewegungen der Kolbenstange 6 über das Gehäuse 13, an dem der gummielastische Körper 14 abgestützt ist, in den Aufbau des Fahrzeugs. Letzteres, nämlich eine unbedämpfte Übertragung von höherfrequent schwingenden Bewegungen der Kolbenstange 6 in den Fahrzeug-Aufbau ist jedoch unerwünscht, weshalb diese durch den gummielastischen Körper 14 möglichst intensiv bedämpft bzw. gedämpft werden sollten, welcher deshalb zumindest annähernd frei von zusätzlichen Kräften, insbesondere resultierend aus einer Verwendung dieses Schwingungsdämpfers 1 als aktiven hydraulischen Steller, sein sollte. Im Hinblick hierauf ist daher nicht nur die analog Fig.1 auf den gummielastischen Körper 14 wirkende Druckkammer 15, sondern weiterhin ein bzw. das analog Fig.1 auf den gummielastischen Körper 14 wirkende(s) Federelement 40 vorgesehen, welches hier zwischen der Befestigungsscheibe 16 und einem geeigneten Absatz oder Vorsprung 13' des Gehäuses 13 des Dämpferlagers eingespannt ist.

Figur 2 zeigt des Weiteren eine zusätzliche Hydraulikdämpfung, die in das Dämpferlager 2 integriert sein kann bzw. bei diesem Ausführungsbeispiel (anders als bei den Ausführungsformen nach den Figuren 1, 3) in das Dämpferlager 2 integriert ist. Diese Hydraulikdämpfung umfasst einen ersten Arbeitsraum 20, der im gummielastischen Körper 14 selbst ausgebildet ist, und zwar auf der der hydraulischen Druckkammer 15 abgewandten Seite der Befestigungsscheibe 16. Des Weiteren ist in den gummielastischen Körper 14 eine hier ringförmige Drosselscheibe 22, in der eine Vielzahl von Durchtrittsöffnungen für Hydraulikflüssigkeit vorgesehen ist, eingesetzt. Diese Drosselscheibe 22 trennt den ersten Arbeitsraum 20 von einem zweiten Arbeitsraum 21. Der zweite Arbeitsraum 21 befindet sich außerhalb bzw. unterhalb des gummielastischen Körpers 14 noch innerhalb des Gehäuses 13. Des Weiteren ist im Gehäuse 13 ein gasgefüllter Ausgleichsraum 23 vorgesehen. Der gasgefüllte Ausgleichsraum 23 ist über eine Membran 24 vom zweiten Arbeitsraum 21 getrennt. Wie Figur 2 zeigt sind der erste Arbeitsraum 20, der zweite Arbeitsraum 21, die Drosselscheibe 22, der Ausgleichsraum 23 und die Membran 24 als ringförmige Elemente konzentrisch um die Kolbenstange 6 angeordnet. Wenn nun über die Kolbenstange 6 eine gewisse (schwingende) Bewegung in Längsrichtung der Kolbenstange 6 in den elastischen Körper 14 eingeleitet wird, so tritt durch die Durchtrittsöffnungen der Drosselscheibe 22 Hydraulikflüssigkeit zwischen den beiden Arbeitsräumen 20 und 21 über, wodurch eine zusätzliche Dämpfung solcher hochfrequenter Bewegungen bzw. Schwingungs-Anregungen erfolgt.

Beim Ausführungsbeispiel nach Fig.3 ist analog den vorhergehenden Varianten nach den Figuren 1, 2 dafür Sorge getragen, dass der gummielastische Körper 14 zumindest annähernd frei von zusätzlichen Kräften, insbesondere resultierend aus einer Verwendung dieses Schwingungsdämpfers 1 als aktiver hydraulischer Steller, ist, wobei in besonders vorteilhafter Weise dieser gummielastische Körper 14 selbst nicht mit der Hydraulikflüssigkeit des Schwingungsdämpfers 1 in Berührung kommt. Analog Fig.2 ist die Kolbenstange 6 dabei mittels einer bzw. über eine Befestigungsscheibe 16 im gummielastischen Körper 14 gelagert, wobei hier dieser gummielastische Körper 14 wieder im wesentlichen rein hohlzylindrisch ist (analog Fig.1) und geeignet im Gehäuse 13 des Dämpferlagers 2 eingespannt ist, indem er in eine Aussparung desselben eingesetzt ist. Dabei ist die Befestigungsscheibe 16 auf einem Absatz 6a der Kolbenstange 6 aufliegend mittels einer Schraubenmutter 41, für welche auf einem im Querschnitt reduzierten Endabschnitt 6b der Kolbenstange ein Gewinde aufgebracht ist, befestigt. Auf dieser Schraubenmutter 41 aufliegend - und somit auf der der Befestigungsscheibe 16 abgewandten Seite derselben - ist ein Federteller 42 auf diesen Kolbenstangen-Endabschnitt 6b aufgesteckt, auf welchem ein bzw. das Federelement 40, dessen Funktion anhand von Fig.1 ausführlich erläutert wurde, aufliegt bzw. abgestützt ist. Mit seinem anderen Ende liegt dieses Federelement 40 an einem sog. Druckausgleichskolben 43 an bzw. es ist dieser innerhalb des Gehäuses 13 des Dämpferlagers 2 in Richtung der Kolbenstange 6 bzw. in Verlagerungsrichtung des Dämpfer-Kolbens 5 über eine gewisse Wegstrecke verlagerbare (und durch die Innenwand des Gehäuses 13 geeignet geführte) Druckausgleichskolben 43 auf dem Federelement 40 abgestützt. Auf der diesem Federelement 40 abgewandten Seite des Druckausgleichskolbens 43 ist im Gehäuse 13 die besagte Druckkammer 15 vorgesehen, in welche hinein die in der Kolbenstange 6 verlaufende fluidleitende Verbindung 12 mündet. Indem somit der über die fluidleitende Verbindung 12 in der Dämpfer-Kammer 8 des Schwingungsdämpfers 1 (vgl. hierzu Fig.1) herrschende Hydraulikdruck in die Druckkamer 15 und von dieser über den Druckausgleichskolben 43 um die Kraft des Federelements 40 reduziert dem Hydraulikdruck in der Dämpfer-Kammer 8 am gummielastischen Körper 14 entgegen wirkt, ist letzterer wie erwünscht im wesentlichen frei von der Einwirkung von (zusätzlichen) in Verlagerungsrichtung des Dämpfer-Kolbens 5 wirkenden Kräften. Wie figürlich dargestellt ist, ist der verlagerbare Druckausgleichskolben 43 bei stillstehendem Dämpfer-Kolben 5 und Druckgleichheit in den beiden Dämpfer-Kammern 7, 8 durch das Federelement 40 gegen einen in die Innenwand des Gehäuses 13 eingearbeiteten Anschlag 44 gedrückt.

Figürlich nicht dargestellt ist eine für sämtliche Ausführungsbeispiele mögliche Weiterbildung, wonach in der Druckkammer 15 zumindest bereichsweise ein Druckschwingungen dämpfendes Material vorgesehen ist. Damit können möglicherweise in der Druckkammer 15 auftretende (abermals) "höherfrequente" Druckschwingungen der bzw. in der Hydraulikflüssigkeit, welche aus der Dämpfer-Kammer 8 über die fluidleitende Verbindung 12 in die Druckkammer 15 übertragen werden könnten, bedämpft werden, so dass keine Gefahr besteht, dass diese über das Gehäuse 13 des Dämpferlagers 2 in den Fahrzeug-Aufbau eingeleitet werden. Selbstverständlich darf dieses Material die Druckkammer 15 nicht soweit ausfüllen, dass diese ihre oben beschriebene Funktion, ein Kräftegleichgewicht darzustellen, nicht mehr erfüllen kann. Bei diesem Druckschwingungen dämpfenden Material kann es sich bspw. um einen geeigneten Schaumstoff handeln, mit dem bspw. die Wände der Druckkammer 15 ausgekleidet sind, so wie dies in Fig.2 in Form eines Bestandteils des elastischen Körpers 14 dargestellt ist. Alternativ kann jedoch die Druckkammer 15 bspw. von Fig.3 mit elastischen, d.h. kompressiblen Kügelchen befüllt sein, oder es sind andere, dem Fachmann für Schwingungsdämpfung bekannte Maßnahmen umgesetzt.

**Patentansprüche**

1. Anordnung eines einem Rad eines Fahrzeugs zugeordneten Schwingungsdämpfers, der einen fluidgefüllten Zylinder (3) aufweist, in dem ein Dämpferkolben (5) mit einer Kolbenstange (6) geführt und beidseitig des Dämpferkolbens (5) eine Dämpfer-Kammer (7, 8) gebildet ist, wobei an die der Kolbenstange (6) gegenüberliegende Dämpferkammer (8) ein insbesondere in Form eines Gasdruckpolsters ausgebildeter Druckspeicher (11) angeschlossen ist, und wobei der Schwingungsdämpfer über ein Dämpferlager (2) mit einem in Verlagerungsrichtung des Dämpferkolbens (5) verformbaren gummielastischen Körper (14) am Fahrzeug-Aufbau gelagert ist, in welchem Dämpferlager (2) weiterhin eine hydraulische Druckkammer (15) ausgebildet ist, die mit derjenigen Dämpfer-Kammer (8) über eine fluidleitende Verbindung (12) verbunden ist, deren Volumen sich beim Einfedern des Rades gegenüber dem Fahrzeug-Aufbau verringert,
**dadurch gekennzeichnet, dass** die zu beiden Seiten des Dämpferkolbens (5) im Dämpfer-Zylinder (3) gebildeten Dämpfer-Kammern (7, 8) über eine motorisch antreibbare Hydraulikpumpe hydraulisch miteinander verbunden sind, und dass im Dämpferlager (2) ein direkt oder indirekt in Verlagerungsrichtung des Dämpferkolbens (5) auf den gummielastischen Körper (14) einwirkendes Federelement (40) vorgesehen ist, dessen Federkraft derart gerichtet und bemessen ist, dass sich bei stillstehendem Dämpferkolben (5) und Druckgleichheit in den beiden Dämpfer-Kammern (7, 8) die auf den gummielastischen Körper in Verlagerungsrichtung des Dämpferkolbens wirkenden Kräfte aufheben, so dass dieser stationär betrachtet frei von in Verlagerungsrichtung des Dämpferkolbens (5) wirkenden Kräften ist.

2. Schwingungsdämpfer nach Anspruch 1, wobei das Federelement (40) direkt oder indirekt gegenüber dem Fahrzeug-Aufbau abgestützt ist.

3. Schwingungsdämpfer nach Anspruch 1, wobei die hydraulische Druckkammer (15) im Dämpferlager (2) ihrerseits nach Art eines Hydraulikzylinders ausgebildet ist und hierfür von einem in Verlagerungsrichtung des Dämpferkolbens (5) verlagerbaren Druckausgleichskolben (43) begrenzt ist, der über das besagte Federelement (40) (d.h. unter Zwischenschaltung des besagten Federelementes (40)) am gummielastischen Körper (14) abgestützt ist.

4. Schwingungsdämpfer nach Anspruch 3, wobei der verlagerbare Druckausgleichskolben bei stillstehendem Dämpferkolben (5) und Druckgleichheit in den beiden Dämpfer-Kammern (7, 8) durch das Federelement gegen einen Anschlag (44) gedrückt ist.

5. Schwingungsdämpfer nach einem der vorhergehenden Ansprüche, wobei ein aus dem Dämpfer-Zylinder (3) ragendes Ende der Kolbenstange (6) mit dem elastischen Körper (14) des Dämpferlagers (2) verbunden ist und die fluidleitende Verbindung (12) durch die Kolbenstange (6) verläuft.

6. Schwingungsdämpfer nach einem der vorhergehenden Ansprüche, **gekennzeichnet durch** eine Hydraulikdämpfung im Dämpferlager (2), umfassend einen fluidgefüllten ersten Arbeitsraum (20) im elastischen Körper (14), einen zweiten Arbeitsraum (21) im Dämpferlager (2) außerhalb des elastischen Körpers (14), und zumindest eine Drosselscheibe (22) zwischen den beiden Arbeitsräumen (20, 21).

7. Schwingungsdämpfer nach Anspruch 6, wobei im Dämpferlager (2) ein gasgefüllter Ausgleichsraum (23) ausgebildet und zwischen dem Ausgleichsraum (23) und dem zweiten Arbeitsraum (21) eine Membran (24) vorgesehen ist.

8. Schwingungsdämpfer nach einem der vorhergehenden Ansprüche, wobei in der Druckkammer (15) zumindest bereichsweise ein Druckschwingungen dämpfendes Material vorgesehen ist.

**Claims**

1. An assembly of a vibration damper, which is associated with a wheel of a vehicle and which comprises a fluid-filled cylinder (3), in which a damper piston (5) with a piston rod (6) is guided and a damper chamber (7, 8) is formed on both sides of the damper piston (5), wherein a pressure store (11) formed more especially in the form of a gas pressure cushion is connected to the damper chamber (8) opposite the piston rod (6), and wherein the vibration damper is mounted on the vehicle body via a damper bearing (2) having a rubber-elastic body (14) deformable in the direction of displacement of the damper piston (5), in which vehicle body (2) a hydraulic pressure chamber (15) is also formed, which is connected via a fluidic connection (12) to that damper chamber (8) of which the volume reduces when the wheel is compressed relative to the vehicle body,
**characterised in that** the damper chambers (7, 8) formed on both sides of the damper piston (5) in the damper cylinder are hydraulically connected to one another via a hydraulic pump that can be motor-driven,

and **in that** a spring element (40) acting directly or indirectly on the rubber-elastic body (14) in the direction of displacement of the damper piston (5) is provided in the damper bearing (2), the spring force of said spring element being directed in such a way and being of such a magnitude that, with immobile damper piston (5) and pressure equalisation in the two damper chambers (7, 8), the forces acting on the rubber-elastic body in the direction of displacement of the damper piston cancel each other out, such that said body, considered in a stationary manner; is free from forces acting in the direction of displacement of the damper piston (5).

2. A vibration damper according to claim 1, wherein the spring element (40) is supported directly or indirectly relative to the vehicle body.

3. A vibration damper according to claim 1, wherein the hydraulic pressure chamber (15) in the damper bearing (2) is formed for its part in the manner of a hydraulic cylinder and for this purpose is delimited by a pressure compensation piston (43) which is displaceable in the direction of displacement of the damper piston (5) and which is supported on the rubber-elastic body (14) via said spring element (40) (i. e. with interpositioning of said spring element (40)).

4. A vibration damper according to claim 3, wherein the displaceable pressure compensation piston, with immobile damper piston (5) and pressure equalisation in the two damper chambers (7, 8), is pushed by the spring element against a stop (44).

5. A vibration damper according to any one of the preceding claims, wherein an end of the piston rod (6) protruding from the damper cylinder (3) is connected to the resilient body (14) of the damper bearing (2) and the fluidic connection (12) runs through the piston rod (6).

6. A vibration damper according to any one of the preceding claims, **characterised by** a hydraulic damping in the damper bearing (2), comprising a fluid-filled first working space (20) in the resilient body (14), a second working space (21) in the damper bearing (2) outside the resilient body (14), and at least one throttle disc (22) between the two working spaces (20, 21).

7. A vibration damper according to claim 6, wherein a gas-filled compensation space (23) is formed in the damper bearing (2) and a membrane (24) is provided between the compensation space (23) and the second working space (21).

8. A vibration damper according to any one of the preceding claims, wherein a material that damps pressure fluctuations is provided in the pressure chamber (15) at least in regions.

**Revendications**

1. Agencement d'un amortisseur d'oscillations associé à une roue d'un véhicule qui comporte un cylindre rempli d'un fluide (3) dans lequel est guidé un piston d'amortissement (5) équipé d'une tige de piston (6), et, délimitant de part et d'autre de ce piston d'amortissement (5) une chambre d'amortissement (7, 8), à la chambre d'amortissement (8) opposée à la tige de piston (6) étant connecté un accumulateur de pression (11) en particulier réalisé sous la forme d'un coussin à gaz sous pression, et l'amortisseur d'oscillations étant monté sur la carrosserie du véhicule par l'intermédiaire d'un palier d'amortissement (2) comprenant un corps (14) ayant l'élasticité du caoutchouc déformable dans la direction de déplacement du piston d'amortissement (5), et dans lequel est en outre formée une chambre de pression hydraulique (15) qui est reliée par l'intermédiaire d'une liaison fluidique (12), à la chambre d'amortissement (8) dont le volume diminue lors d'une compression de la suspension de la roue par rapport à la carrosserie du véhicule,
**caractérisé en ce que**
les chambres d'amortissement (7, 8) formées dans le cylindre d'amortissement (3) de part et d'autre du piston d'amortissement (5) sont reliées hydrauliquement par l'intermédiaire d'une pompe hydraulique à commande motorisée, et, il est prévu, dans le palier d'amortissement (2) un élément élastique (40) agissant directement ou indirectement sur le corps (14) ayant l'élasticité du caoutchouc dans la direction de déplacement du piston d'amortissement (5) et dont la force de rappel est orientée et dimensionnée de sorte que lorsque le piston d'amortissement (5) est immobile et que la pression dans les deux chambres d'amortissement (7, 8) est à l'équilibre, les forces agissant sur le corps ayant l'élasticité du caoutchouc dans la direction de déplacement du piston d'amortissement se compensent pour que celui-ci, considéré comme stationnaire soit exempt de forces agissant dans sa direction de déplacement.

2. Amortisseur d'oscillations conforme à la revendication 1, dans lequel l'élément élastique (40) s'appuie directement ou indirectement sur la carrosserie du véhicule.

3. Amortisseur d'oscillations conforme à la revendication 1, dans lequel la chambre de pression hydraulique (15) située dans le palier d'amortissement (2) est de son côté réalisée sous la forme d'un cylindre hydraulique, et, est délimitée à cet effet, par un piston d'équilibrage de pression (43) pouvant se déplacer dans la direction de déplacement du piston d'amortissement (5), et qui s'appuie contre le corps (14) ayant l'élasticité du caoutchouc par l'intermédiaire de l'élément élastique (40), c'est-à-dire avec interposition de cet élément élastique (40).

4. Amortisseur d'oscillations conforme à la revendication 3, dans lequel lorsque le piston d'amortissement (5) est immobile et que la pression dans les deux chambres d'amortissement (7, 8) est à l'équilibre, le piston d'équilibrage de pression déplaçable est comprimé, contre une butée (44) par l'élément élastique.

5. Amortisseur d'oscillations conforme à l'une des revendications précédentes, dans lequel l'extrémité de la tige de piston (6) dépassant du cylindre d'amortissement (3) est reliée au corps élastique (14) du palier d'amortissement (2) et la liaison fluidique (12) s'étend au travers de la tige de piston (6).

6. Amortisseur d'oscillations conforme à l'une des revendications précédentes,
**caractérisé par**
un système d'amortissement hydraulique situé dans le palier amortisseur (2) et comprenant une première chambre de travail (20) remplie de fluide située dans le corps élastique (14), une seconde chambre de travail (21) située dans le palier d'amortissement (2) à l'extérieur du corps élastique (14) et au moins un disque d'étranglement (22) situé entre les deux chambres de travail (20, 21).

7. Amortisseur d'oscillations conforme à la revendication 6,
dans lequel une chambre d'équilibrage (23) remplie de fluide est formée dans le palier d'amortissement (2), et il est prévu une membrane (24) entre la chambre d'équilibrage (23) et la seconde chambre de travail (21).

8. Amortisseur d'oscillations conforme à l'une des revendications précédentes,
dans lequel dans la chambre de pression (15) il est prévu au moins par zones un matériau amortissant les oscillations de pression.

Fig. 1

EP 3 137 321 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19629959 A1
- US 8376100 B2
- JP S58136506 A